# EUROPEAN PATENT SPECIFICATION

(11) **EP 3 310 565 B1**
(45) Date of publication and mention of the grant of the patent: **26.12.2018**
(21) Application number: 16733324.4
(22) Date of filing: 15.06.2016
(51) Int. Cl.: B29D 35/12

(54) **MANUFACTURING SYSTEM OF A SOLE AND RELEVANT SHOE**
HERSTELLUNGSSYSTEM EINER SOHLE UND ENTSPRECHENDER SCHUH
SYSTÈME DE FABRICATION D'UNE SEMELLE ET CHAUSSURE CORRESPONDANTE

(30) Priority: 18.06.2015 IT UB20151500
(43) Date of publication of application: 25.04.2018
(73) Proprietor: Gommus Societa' Cooperativa Per Azioni, 60036 Montecarotto (IT)
(72) Inventor: TARINI, Andy, 60044 Fabriano (AN) (IT)
(74) Representative: Baldi, Claudio
(86) International application number: PCT/EP2016/063700
(87) International publication number: WO 2016/202831

(56) References cited:
- US-A- 4 217 081
- US-A1- 2014 015 169

## Description

The present patent application for industrial invention relates to a manufacturing system of a sole and of a shoe comprising said sole.

Soles for shoes made of non-thermoplastic vulcanized rubber are known. Vulcanized rubber soles are obtained with molding technique using molds made of aluminum alloy. Molding techniques include injection molding, according to which a fluid material is injected in the mold cavity, and compression molding, according to which a solid plate of vulcanized rubber is disposed in the mold cavity.

The shape of the mold cavity is identical In both cases (injection molding and compression molding). The mold comprises a die wherein impressions are obtained to form the sole tread and a lid that is coupled with the die to close the mold.

Vulcanized rubber that is sufficiently hard to resist abrasion is generally chosen to guarantee good resistance and long life. However, in this case, the sole is rigid, difficult to bend and uncomfortable for the user. In order to solve these drawbacks, the tread of the sole is generally provided with grooves that are used to make the sole lighter and more flexible and increase the grip on the ground.

The grooves in the tread of the sole are obtained by means of ribs that protrude in upper position from the die of the mold. Considering that the ribs are made of the same material as the mold (aluminum alloy), some strict geometrical constraints apply on the ribs of the die of the mold. In fact, if the ribs are too long, too high or too thin, they tend to bend or even break during the molding process.

Consequently, the ribs of the die must be short or arranged in a grid, low and thick. In view of the above, the ribs on the tread do not extend for the entire width of the sole, are not deep and are very wide. Evidently, this type of ribs involves some drawbacks from the structural viewpoint, because the flexibility of the sole is not improved, as well as from the aesthetic viewpoint, because the rib is very wide and therefore perfectly visible.

US2014/015169 discloses a mold intended to be used for manufacturing a sole for an article of footwear and comprising a die composed of a plate-shaped body made of aluminum alloy.

The purpose of the present invention is to eliminate the drawbacks of the prior art by disclosing a system for manufacturing a sole that is practical, versatile, efficient, effective and simple to use..

Another purpose is to disclose a shoe provided with said sole, which is comfortable for the user and at the same time able to give a good aesthetic impression.

The invention is defined by the appended independent claims.

Advantageous embodiments appear from the dependent claims.

The system of the invention comprises a mold for manufacturing a sole for a shoe. The mold comprises a die consisting in plate-shaped body made of aluminum alloy. The die comprises a cavity that reproduces the shape of the sole. The cavity of the die has a bottom part. A plurality of blades protrudes from the bottom wall of the cavity of the die. The blades are made of a harder material than the aluminum alloy used for the body of the die. The blades have a thickness lower than 2 mm, preferably 0.8 - 1.5 mm, and a height higher than 5 mm, preferably 6 - 11 mm.

In view of the above, the blades are not deformed during the molding of the sole and are suitable for generating deep and thin grooves in the sole that improve the deformation of the sole, without impairing the aesthetics of the sole.

Additional features of the invention will appear clearer from the detailed description below, which refers to merely illustrative, not limiting embodiments, wherein:
Fig. 1 is a longitudinal section of a die of a mold according to the invention;
Fig. 2 is a side view of a sole that has just been extracted from the mold of Fig. 1,
Fig. 3 is a bottom view of the sole of Fig. 2;
Fig. 4 is a longitudinal sectional view of a shoe with the sole of Fig. 2, after applying a last; and
Fig. 5 is a bottom view of the shoe of Fig. 4.

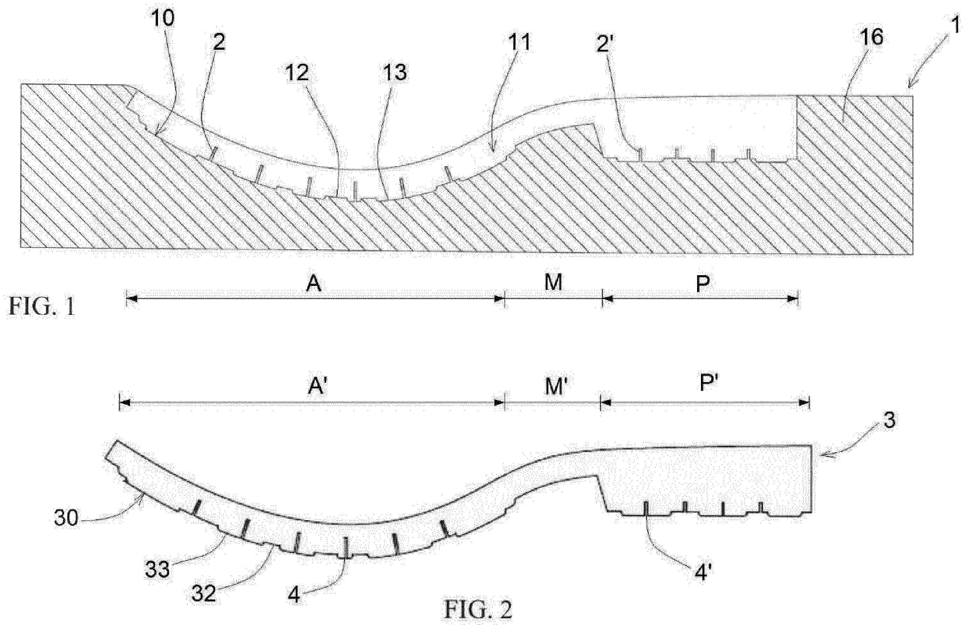

With reference to Fig. 1, a die (1) of a mold according to the invention is disclosed. The die (1) comprises a plate-shaped body (16) made of aluminum alloy.

A cavity (11) opened on top is obtained in the body (16). The cavity (11) reproduces the shape of the sole to be manufactured.

The cavity (11) comprises:
- a back portion (P) intended to form the heel of the sole;
- a front portion (A) intended to form the front part of the sole that is disposed under the forefoot and the midfoot; and
- an intermediate portion (M) between the front portion (A) and the back portion (P).

The back portion (P) has a double length than the intermediate portion (M). The front portion (A) has a double length than the back portion (P).

The back portion (P) is shaped as a recessed housing with rectangular shape, having a depth of approximately 20 - 30 mm. The front portion (A) is shaped as a concave housing, in longitudinal section, with a depth of approximately 10 - 20 mm. The intermediate portion (M) is shaped as a convex housing, in longitudinal section, with a depth that is slightly lower than the front portion (A).

The cavity (11) has a bottom wall (10). The die (1) comprises relief parts (12) that protrude in upper position from the bottom wall (10) of the cavity, defining recessed parts (13). The relief parts (12) intersect, forming a grid, in such a way that the recessed parts (13) are shaped as geometrical figures. For illustrative purposes, the relief parts (12) can be shaped as inclined stripes relative to a longitudinal axis of the sole. In this way, the recessed parts (13) are shaped as rhombuses or squares, whereas the more peripheral recessed parts (13) are shaped as triangles.

The relief parts (12) protrude in upper position relative to the recessed parts (13) by a height of approximately 1-2 mm. The relief parts (12) have a width of approximately 5-10 mm. Given the fact that the relief parts intersect mutually, are low and wide, the relief parts (12) suffer no deformation during the molding process of the sole and they can be made of the same material as the body (10) of the die, that is to say aluminum alloy.

Advantageously, the relief parts (12) and the recessed parts (13) are obtained in the front portion (A) and in the back portion (P) of the cavity of the die. Instead, the intermediate portion (M) is devoid of relief parts and of recessed parts.

According to the invention, the die (1) comprises a plurality of blades (2) that protrude in upper part from the bottom wall (10) of the cavity (11) of the die. The blades (2) have a low thickness, lower than 2 mm, preferably being 0.8 - 1.5 mm.

The blades (2) pass across the relief parts (12) and the recessed parts (13). The height of the blades (2) relative to the recessed parts (13) of the bottom of the cavity of the die is higher than 5 mm, being preferably comprised between 6 and 11 mm. Advantageously, the height of the blades (2) is equal to or higher than half depth of the front part (A) of the cavity of the mold.

Advantageously, the blades (2) are disposed in parallel position and extend transversally for the entire width of the cavity (11) of the die. Therefore the blades (2) do not intersect and have a length higher than 70 mm, preferably 80 - 120 mm. Evidently, being so long, high and thin, the blades are deformed and may even break during the molding of the sole. Therefore the blades (2) are made of a harder and more resistant material than the aluminum alloy used for the body (10) of the mold. The blades (2) are made of steel, preferably hardened steel.

Advantageously, the blades (2) are disposed in the front portion (A) of the cavity of the die. However blades (2') can be provided also in the back portion (P) of the cavity of the die. The blades (2) in the front portion (A) are higher than the blades (2') in the back portion. The blades (2) in the front portion have a height of approximately 6 - 11 mm.

Six blades (2) are provided in the front portion (A) and spaced by a distance of approximately 15 - 25 mm. Four blades (2) are provided in the back portion (B) and spaced by a distance of approximately 10 - 20 mm.

Advantageously, the front portion (A) is highly curved with respect to a traditional mold. Therefore the front portion (A) has a very small radius of curvature, lower than 140 mm, preferably comprised between 125 and 140 mm.

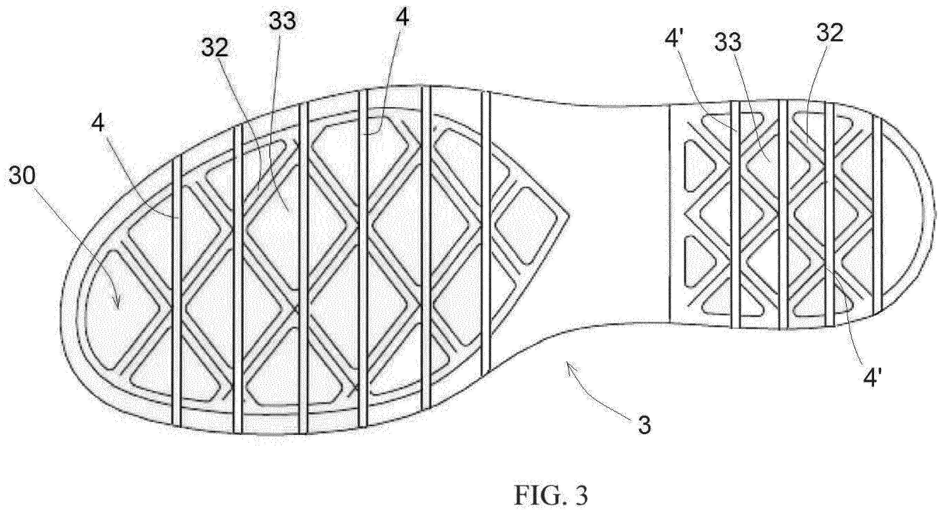

With reference to Figs. 2 and 3, a sole (3) obtained with the die (1) of Fig. 1 is disclosed. The sole (3) is obtained with injection molding by injecting vulcanized rubber in fluid state into the cavity (11) of the die that is closed with a suitable lid (not shown). The fluid material solidifies in the cavity (11) of the mold and is given the shape of the cavity of the mold.

Alternatively, the sole (3) can be obtained by providing a vulcanized rubber plate in the cavity (11) of the die and closing the mold under compression with a lid (not shown) that is coupled on the die (1), by exerting a compression on the vulcanized rubber plate that takes the shape of the cavity (11) of the die.

Of the various types of vulcanized rubber, a mixture of SBR styrenebutadiene rubber (SBR) or natural rubber (NR) is preferably used, to which reinforcing fillers, accelerating fillers and anti-aging agents are added to define the hardness and the resistance of the sole. Advantageously, a mixture that guarantees a Shore A hardness comprised between 50 and 80 is chosen in order to ensure a good resistance and long life of the sole. Coloring pigments can be added to the mixture in order to define the color of the sole.

The sole comprises a back portion (P'), an intermediate portion (M') and a front portion (A') exactly in correspondence of the back portion (P), the intermediate portion (M) and a front portion (A) of the cavity (11) of the die of the mold.

Therefore the back portion (P') has a double length than the intermediate portion (M') of the sole. The front portion (A') has a double length than the back portion (P') of the sole.

The back portion (P') of the sole has the shape of a heel with thickness of approximately 20 - 30 mm. The front portion (A') of the sole is shaped as a curved plate with concavity directed upwards and a thickness of approximately 10 - 20 mm. The immediate portion (M') of the sole is shaped as a curved plate with concavity directed downwards and thickness slightly lower than the front portion (A').

The sole (3) comprises a tread (30) intended to be directed towards the ground. The tread (30) of the sole comprises:
- recessed parts (32) formed in the protruding portions (12) of the bottom of the cavity of the die, and
- protruding parts (33) formed in the recessed portions (13) of the bottom of the cavity of the die, and

With reference to Fig. 3, the recessed parts (32) of the sole are shaped as wide shallow channels that intersect to form a grid, in such a way that the protruding parts (33) are shaped as geometrical figures. The more central protruding parts (33) are shaped as rhombuses in the front part of the sole and squares in the back part of the sole, whereas the more peripheral protruding parts (33) are shaped as triangles.

The recessed parts (32) of the sole have a depth of approximately 1-2 mm and a width of approximately 5-10 mm.

Advantageously, the recessed parts (32) and the protruding parts (33) are obtained in the front portion (A') and in the back portion (P') of the sole.

According to the invention, the sole (3) comprises a plurality of grooves (4) that are formed because of the blades (2) of the die. The grooves (4) are obtained in the tread (30) of the sole and extend until approximately half of the thickness of the sole. The grooves (4) have a low width, lower than 2 mm, preferably 0.8 - 1.5 mm.

The grooves (4) pass across the recessed parts (32) and the relief parts (33) of the tread of the sole. The depth of the grooves (4) with respect to the relief parts (33) of the tread of the sole is higher than 5 mm, preferably 6 - 11 mm. Advantageously, the depth of the grooves (4) is equal to or higher than half of the thickness of the front part (A') of the sole.

The grooves (4) of the sole are disposed in parallel position and extend transversally for the entire width of the sole. Therefore the grooves (4) do not intersect and have a length comprised between 80 and 120 mm.

Advantageously, the grooves (4) are disposed in the front portion (A') of the sole. However grooves (4') can be provided also in the back portion (P') of the sole. The grooves (4) in the front portion (A') of the sole are deeper than the grooves (4') in the back portion (P') of the sole. The grooves (4) in the front portion (A') have a depth of approximately 6 - 8 mm.

Six grooves (4) are provided in the front portion (A') of the sole and spaced by a distance of approximately 15 - 25 mm. Four grooves (4') are provided in the back portion (B') of the sole and spaced by a distance of approximately 10 - 20 mm.

Advantageously, immediately after being extracted from the mold, the front portion (A') of the sole is highly curved, with a very small radius of curvature, lower than 140 mm, preferably comprised between 125 and 140 mm, like the radius of curvature of the front portion of the cavity (11) of the mold. Such an accentuated curvature of the front portion (A') of the sole is not suitable for a shoe, because it would generate an unnatural curvature of the forefoot of the user.

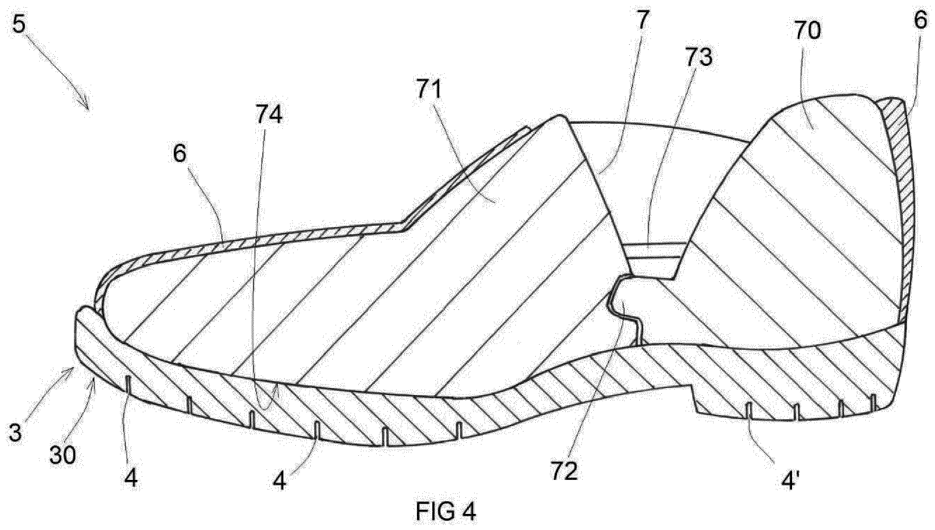

With reference to Fig. 4, a shoe (5) obtained with the sole (3) of Figs. 2 and 3 is disclosed.

The shoe (5) comprises an upper (6) fixed to the sole (3), for instance by seaming or welding.

A last (7) is inserted into the shoe (5). The last (7) comprises:
- a back portion (70) intended to be disposed in correspondence of the back portion (P) of the sole,
- a front portion (71) intended to be disposed in correspondence of the front portion (A) of the sole, and
- a hinge (72) that connects the back portion (70) to the front portion (71) of the last, said hinge being intended to be disposed in correspondence of the intermediate portion (M) of the sole.

Adjusting means (73), such as for example screw means, are disposed between the back part and the front part (70) of the last to adjust the position of the front part with respect to the back part.

The front part (71) of the last has a bottom surface (74) that comes in contact with the front portion of the sole. The bottom surface (74) of the front part of the last is slightly curved in longitudinal section, with a much lower curvature than the front part (A') of the sole after being extracted from the mold. The bottom surface (74) of the front part of the last has a radius of curvature higher than 500 mm, preferably a radius of curvature comprised between 800 and 1100 mm. Such a slight curvature of the bottom surface (74) of the front part of the last is perfectly suitable for reproducing the shape of the foot under the forefoot.

Consequently, the sole (3) that had an excessively curved front part (A') is partially straightened by the last (7). Therefore the front part (A') of the sole is given a slight curvature like the bottom surface (74) of the front part of the last. Therefore the front part (74) of the sole of the shoe (5) has a radius of curvature higher than 500 mm, preferably a radius of curvature comprised between 800 and 1100 mm.

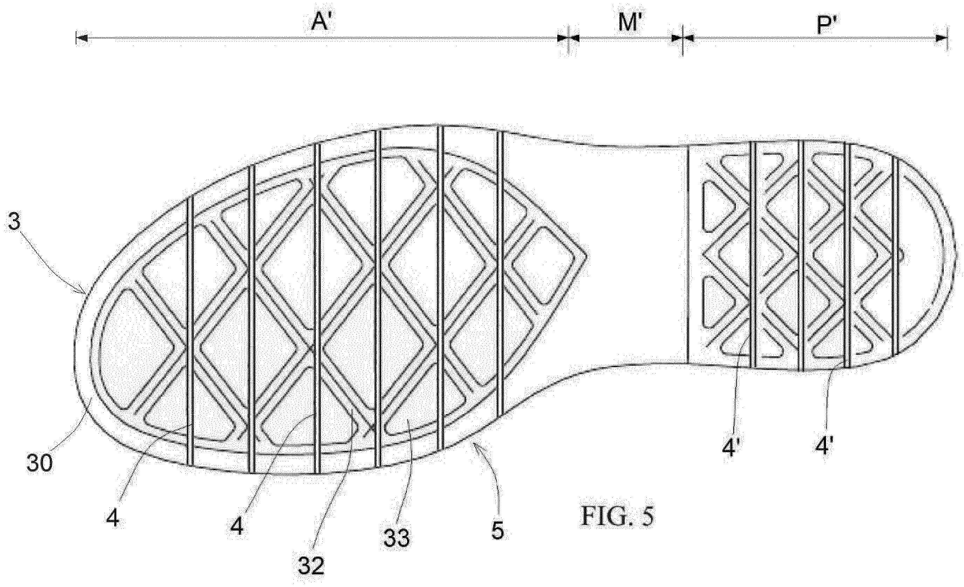

As shown in Fig. 5, the reduction of the curvature of the front part (A') of the sole involves a considerable reduction of the width of the grooves (4) provided in the tread of the front part of the sole. In such a way, when the shoe is not worn, the width of the grooves (4) is reduced by less than 0.5 mm. Therefore the grooves (4) are almost invisible at the naked eye.

However, it must be considered that the grooves (4) are very deep; the grooves (4) have a depth that is equal to or higher than half of the thickness of the sole. Therefore for a sole with thickness of approximately 10-20 mm, the grooves (4) have a thickness of approximately 6 - 11 mm. Such a condition makes the front part (A') of the sole especially flexible with possibility of bending when walking, and therefore comfortable for the foot of the user.

## Claims

1. Mold for manufacturing a sole (3) for shoe (5),
said mold comprising a die (1) consisting in a plate-shaped body (16) made of aluminum alloy,
said die (1) comprises:
- a cavity (11) that reproduces the shape of the sole, the cavity (11) of the die having a bottom wall (10), and
- a plurality of blades (2) that protrude from the bottom wall (10) of the cavity of the die,
**characterized in that**
said blades (2) are made of a harder material than the aluminum alloy used for the body (16) of the die,
said blades (2) have a thickness lower than 2 mm, preferably 0.8 - 1.5 mm, and
said blades (2) have a height higher than 5 mm, preferably 6 - 11 mm.

2. The mold of claim 1, wherein said blades (2) of the die are made of steel, preferably hardened steel.

3. The mold of claim 1 or 2, wherein said blades (2) of the die are separated and have a length higher than 70 mm, preferably 80 - 120 mm.

4. The mold of any one of the preceding claims, wherein said blades (2) are parallel and disposed transversally in the cavity (11) of the die.

5. The mold of any one of the preceding claims, wherein the cavity (11) of the die comprises:
- a back portion (P) intended to form the heel of the sole;
- a front portion (A) intended to form the front part of the sole that is disposed under the forefoot and the midfoot; and
- an intermediate portion (M) between the front portion (A) and the back portion (P),
said blades (2) being disposed in the front portion (A) of the cavity of the die.

6. The mold of claim 5, wherein the bottom (10) of the cavity of the die, in the front portion (A) of the cavity of the die, has a concave profile in longitudinal section, with a high curvature and a radius of curvature lower than 140 mm, preferably comprised between 125 and 140 mm.

7. The mold of any one of the preceding claims, wherein relief parts (12) are provided on the bottom (10) of the cavity of the die, defining recessed parts (13), the relief parts (12) intersect forming a grid, in such a way that the recessed parts (13) are shaped as geometrical figures, said blades (2) being disposed on the relief parts (12) and the recessed parts (13) of the bottom of the cavity of the die.

8. Manufacturing process of a shoe (5) with a mold according to any one of the preceding claims, comprising the following steps:
- injection of a vulcanized rubber mixture in fluid state into said cavity (11) of the die and solidification of said vulcanized rubber mixture inside the cavity of the die in such a way to obtain a sole (3) or provision of a solid vulcanized rubber plate in said cavity (11) of the die and compressing said vulcanized rubber plate in such a way to obtain a sole (3) shaped as the cavity of the die,
- extracting the sole (3) from the cavity of the die, said sole (3) comprising a front portion (A') having a concave profile in longitudinal section, with a given curvature, and grooves (4) obtained in said front portion (A') in correspondence of said blades (2) of the die of the mold, said grooves (4) having a width lower than 2 mm, preferably 0.8 - 1.5 mm, and a depth higher than 5 mm, preferably 6 - 11 mm,
- fixing an upper (6) on said sole (3),
- inserting a last (7) in said shoe, in such a way to reduce the curvature of said front portion (A') of the sole and reduce the width of said grooves (4) of the sole.

9. The process of claim 8, wherein said last (7) comprises a back portion (70) and a front portion (71) hinged together, the front portion (71) of the last having a curved bottom wall (74) in longitudinal section, with a radius of curvature higher than the radius of curvature of a front portion (A) of the cavity (11) of the die.

## Patentansprüche

1. Formwerkzeug zur Herstellung einer Sohle (3) für Schuhe (5), wobei das Formwerkzeug eine Matrize (1) umfasst, das aus einem plattenförmigen Körper (16) aus Aluminiumlegierung besteht.
wobei die Matrize (1) Folgendes umfasst:
- einen Hohlraum (11), der der Form der Sohle entspricht, wobei der Hohlraum (11) der Matrize eine Bodenwand (10) aufweist, und
- eine Mehrzahl von Klingen (2), die aus der Bodenwand (10) des Hohlraums der Matrize auskragen,
**dadurch gekennzeichnet, dass**
die Klingen (2) aus einem Material hergestellt sind, das härter als die den Körper (16) der Matrize bildende Aluminiumlegierung ist,
die Klingen (2) eine Stärke von weniger als 2 mm, vorzugsweise 0,8 - 1,5 mm aufweisen und
die Klingen (2) eine Höhe von mehr als 5 mm, vorzugsweise 6 - 11 mm aufweisen.

2. Formwerkzeug nach Anspruch 2, wobei die Klingen (2) der Matrize aus Stahl, vorzugsweise aus gehärtetem Stahl hergestellt sind.

3. Formwerkzeug nach Anspruch 1 oder 2, wobei die Klingen (2) der Matrize voneinander getrennt sind und eine Länge von mehr als 70 mm, vorzugsweise 80 - 120 mm aufweisen.

4. Formwerkzeug nach einem der vorstehenden Ansprüche, wobei die Klingen (2) zueinander parallel und quer in dem Hohlraum (11) der Matrize angeordnet sind.

5. Formwerkzeug nach einem der vorstehenden Ansprüche, wobei der Hohlraum (11) der Matrize Folgendes umfasst:
- einen hinteren Abschnitt (P), der dazu bestimmt ist, den Absatz der Sohle zu bilden;
- einen vorderen Abschnitt (A), der dazu bestimmt ist, den vorderen Teil der Sohle zu bilden, der unter dem Vorfuß und dem Mittelfuß zu liegen kommt; und
- einen Zwischenabschnitt (M) zwischen dem vorderen Abschnitt (A) und dem hinteren Abschnitt (P),
wobei die Klingen (2) im vorderen Abschnitt (A) des Hohlraums der Matrize angeordnet sind.

6. Formwerkzeug nach Anspruch 5, wobei der Boden (10) des Hohlraums der Matrize im vorderen Abschnitt (A) des Hohlraums der Matrize ein im Längsschnitt konkaves Profil mit einer starken Krümmung und einem Krümmungsradius von weniger als 140 mm, vorzugsweise zwischen 125 und 140 mm aufweist.

7. Formwerkzeug nach einem der vorstehenden Ansprüche, wobei auf dem Boden (10) des Hohlraums der Matrize vorstehende Teile (12) vorgesehen sind, die tiefliegende Teile (13) definieren, wobei die vorstehenden Teile (12) sich miteinander kreuzen und ein Gitter bilden, so dass die tiefliegenden Teile (13) die Form geometrischer Figuren aufweisen, wobei die Klingen (2) auf den vorstehenden Teilen (12) und den tiefliegenden Teilen (13) des Bodens des Hohlraums der Matrize angeordnet sind.

8. Verfahren zur Herstellung eines Schuhs (5) mit einem Formwerkzeug nach einem der vorstehenden Ansprüche, umfassend die folgenden Schritte:
- Einspritzen einer vulkanisierten Gummimischung in flüssigem Zustand in den Hohlraum (11) der Matrize und Verfestigen der vulkanisierten Gummimischung in dem Hohlraum der Matrize, um eine Sohle (3) oder die Bereitstellung einer festen, vulkanisierten Gummiplatte in dem Hohlraum (11) der Matrize zu erhalten, und Zusammendrücken der vulkanisierten Gummiplatte, um eine Sohle (3) zu erhalten, die die Form des Hohlraums der Matrize annimmt,
- Herausnehmen der Sohle (3) aus dem Hohlraum der Matrize, wobei die Sohle (3) einen vorderen Abschnitt (A') mit einem im Längsschnitt konkaven Profil mit einer bestimmten Krümmung und Rillen (4) umfasst, die in dem vorderen Abschnitt (A') an den Klingen (2) der Matrize des Formwerkzeugs herausgearbeitet sind, wobei die Rillen (4) eine Breite von weniger als 2 mm, vorzugsweise 0,8 - 1,5 mm, und eine Tiefe von mehr als 5 mm, vorzugsweise 6 - 11 mm aufweisen,
- Befestigen eines Obermaterials (6) an der Sohle (3),
- Einsetzen eines Leistens (7) in den Schuh, um die Krümmung des vorderen Abschnitts (A') der Sohle zu vermindern und die Breite der Rillen (4) der Sohle zu vermindern.

9. Verfahren nach Anspruch 8, wobei der Leisten (7) einen hinteren Abschnitt (70) und einen vorderen Abschnitt (71) umfasst, die aneinander angelenkt sind, wobei der vordere Abschnitt (71) des Leistens eine im Längsschnitt gekrümmte Bodenwand (74) mit einem Krümmungsradius aufweist, der größer als der Krümmungsradius eines vorderen Abschnitts (A) des Hohlraums (11) der Matrize ist.

## Revendications

1. Moule pour la production d'une semelle (3) pour chaussure (5),
ledit moule comprenant une matrice (1) composée d'un corps (16) en forme de plaque en alliage d'aluminium,
ladite matrice (1) comprenant :
- une cavité (11) qui reproduit la forme de la semelle, la cavité (11) de la matrice ayant une paroi de fond (10), et
- une pluralité de lames (2) qui font saillie de la paroi de fond (10) de la cavité de la matrice,
**caractérisé en ce que**
lesdites lames (2) sont réalisées dans un matériel plus dur par rapport à l'alliage d'aluminium qui compose le corps (16) de la matrice,
lesdites lames (2) ont une épaisseur inférieure à 2 mm, préférablement entre 0,8 - 1,5 mm, et
lesdites lames (2) ont une hauteur majeure de 5 mm, préférablement entre 6 - 11 mm.

2. Moule selon la revendication 1, où lesdites lames (2) de la matrice sont réalisées en acier, préférablement en acier trempé.

3. Moule selon la revendication 1 ou 2, où lesdites lames (2) de la matrice sont séparées entre elles et ont une longueur majeure de 70 mm, préférablement entre 80 - 120 mm.

4. Moule selon l'une quelconque des revendications précédentes, où lesdites lames (2) sont parallèles entre elles et disposées transversalement dans la cavité (11) de la matrice.

5. Moule selon l'une quelconque des revendications précédentes, où la cavité (11) de la matrice comprend :
- une portion postérieure (P) destinée à former le talon de la semelle ;
- une portion antérieure (A) destinée à former la partie avant de la semelle qui se dispose sous l'avant-pied et le centre du pied ; et
- une portion intermédiaire (M) de raccord entre la portion antérieure (A) et la portion postérieure (P),
dites lames (2) étant disposées dans ladite portion antérieure (A) de la cavité de la matrice.

6. Moule selon la revendication 5, où le fond (10) de la cavité de la matrice, dans la portion antérieure (A) de la cavité de la matrice, a un profil concave en section longitudinale, avec une courbure élevée et un rayon de courbure inférieur à 140 mm, préférablement compris entre 125 et 140 mm.

7. Moule selon l'une quelconque des revendications précédentes, où sur le fond (10) de la cavité de la matrice sont prévues des parties en relief (12) qui définissent des parties creuses (13), les parties en relief (12) s'entrecroisant pour former un réticule, de manière à ce que les parties creuses (13) aient la forme de figures géométriques, lesdites lames (2) étant disposées au-dessus des parties en relief (12) et des parties creuses (13) du fond de la cavité de la matrice.

8. Processus pour la production d'une chaussure (5) avec un moule selon l'une quelconque des revendications précédentes, comprenant les phases suivantes :
- injection d'un mélange de caoutchouc vulcanisé à l'état fluide dans ladite cavité (11) de la matrice et solidification de dit mélange de caoutchouc vulcanisé dans la cavité de la matrice de manière à obtenir une semelle (3) ou disposition d'une plaque de caoutchouc vulcanisé solide dans ladite cavité (11) de la matrice et compression de ladite plaque de caoutchouc vulcanisé de manière à obtenir une semelle (3) qui assume la forme de la cavité de la matrice,
- extraction de la semelle (3) de la cavité de la matrice, ladite semelle (3) comprenant une portion antérieure (A') ayant un profil concave en section longitudinale, avec une courbure déterminée, et des rainures (4) obtenues dans ladite portion antérieure (A') en correspondance des dites lames (2) de la matrice du moule, lesdites rainures (4) ayant une ampleur inférieure à 2 mm, préférablement entre 0,8 - 1,5 mm, et une profondeur majeure de 5 mm, préférablement entre 6-11 mm,
- fixation de l'empeigne (6) sur ladite semelle (3),
- introduction d'une forme (7) dans ladite chaussure, de manière à diminuer la courbure de ladite portion antérieure (A') de la semelle et diminuer l'ampleur des dites rainures (4) de la semelle.

9. Processus selon la revendication 8, où ladite forme (7) comprend une portion postérieure (70) et une portion antérieure (71) pivotées entre elles, la portion antérieure (71) de la forme ayant une paroi de fond (74) courbée en section longitudinale, avec un rayon de courbure majeur par rapport au rayon de courbure d'une portion antérieure (A) de la cavité (11) de la matrice.
